Europäisches Patentamt

European Patent Office

Office européen des brevets

(11) Veröffentlichungsnummer: **0 379 864**
**A2**

## (12) EUROPÄISCHE PATENTANMELDUNG

(21) Anmeldenummer: **90100155.2**

(22) Anmeldetag: **04.01.90**

(51) Int. Cl.⁵: **F16F 9/52, F16F 9/02, B62D 25/12**

(30) Priorität: **27.01.89 DE 3902361**

(43) Veröffentlichungstag der Anmeldung:
**01.08.90 Patentblatt 90/31**

(84) Benannte Vertragsstaaten:
**DE FR GB IT SE**

(71) Anmelder: **Fritz Bauer + Söhne oHG**
**Industriestrasse 12-14**
**D-8503 Altdorf b. Nürnberg(DE)**

(72) Erfinder: **Bauer, Hans-Peter**
**Ziegelhütte 9**
**D-8503 Altdorf(DE)**
Erfinder: **Bauer, Hans Jürgen**
**Am Eichenhain 8**
**D-8503 Altdorf(DE)**
Erfinder: **Stadelmann, Ludwig**
**Schopperstrasse 14**
**D-8503 Altdorf(DE)**

(74) Vertreter: **Rau, Manfred, Dr. Dipl.-Ing. et al**
**Rau & Schneck, Patentanwälte Königstrasse 2**
**D-8500 Nürnberg 1(DE)**

(54) **Gasfeder mit temperaturunabhängiger Ausschubkraft.**

(57) Eine Gasfeder mit temperaturunabhängiger Ausschubkraft, insbesondere als Hub- und/oder Abstützelement für einen Deckel, insbesondere eines Kraftfahrzeuges, weist ein Gehäuse (6) mit abgedichtet aus diesem herausgeführter Kolbenstange (10) auf. Sein Innenraum (12) ist mit Druckgas gefüllt. Um mit relativ einfachen Mitteln eine Konstanthaltung der Ausschubkraft über weite Temperaturbereiche zu gewährleisten, ist der Innenraum (12) der Gasfeder (4 bzw. 5) über eine Verbindungsleitung (15) mit einer Druckerzeugungs-Einheit (16) verbunden, die mittels eines Elektromotors (26) in Abhängigkeit von der Temperatur oder dem Druck des Gases in der Gasfeder (4,5) antreibbar ist.

FIG. 2

Die Erfindung betrifft eine Gasfeder mit temperaturunabhängiger Ausschubkraft, insbesondere als Hub-und/oder Abstützelement für einen Deckel.

Es ist bekannt, auch als Gaskraftspeicher bezeichnete Gasfedern zum Abstützen von Motorhauben, Kofferraumdeckeln oder Heckklappen von Kraftfahrzeugen zu verwenden. Hierbei sind die Gasfedern so ausgelegt, daß in der Regel bei + 20°C die gewünschte Abstützkraft erreicht wird. Dies bedeutet, daß bei geöffneter Haube, Klappe oder geöffnetem Deckel von der Gasfeder eine Kraft ausgeübt wird, die etwas größer ist als die zum Heben des erwähnten Teils erforderliche Kraft. Zum Schließen des Deckels, der Klappe oder der Haube muß dann eine geringe Druckkraft nach unten ausgeübt werden. Bei Temperaturen oberhalb von 20°C steigt der Gasdruck in der Gasfeder mit der Folge, daß die Hub kraft zu groß wird, d.h. es besteht die Gefahr, daß der Deckel, die Klappe oder die Haube zu schnell bzw. zu hart geöffnet wird und daß eine zu große Kraft zum Schließen erforderlich ist. Umgekehrt besteht bei Temperaturen unterhalb von 20°C die Gefahr, daß die Kraft zum Heben des Teils nicht mehr ausreicht und daß das Teil insbesondere von der Gasfeder in geöffnetem Zustand nicht mehr gehalten wird. In letzterem Fall kann der Deckel, die Klappe oder die Haube herunterschlagen. Wenn von einer Gasfeder die Rede ist, so schließt dies naturgemäß ein, daß - wie in der Praxis allgemein üblich - für solche Heckklappen, Kofferraumdeckel oder Motorhauben zwei Gasfedern eingesetzt werden, um eine unsymmetrische Kraftbelastung dieses Teils zu vermeiden.

Zur Lösung der geschilderten Probleme, die sich durch Temperaturschwankungen ergeben, die im Bereich von ± 50°C liegen können, sind zahlreiche Vorschläge bekannt geworden, bei denen der das Druckgas enthaltende Innenraum der Gasfeder ein variables Volumen hat. Das Volumen nimmt mit zunehmender Temperatur zu, so daß wiederum der Gasdruck in dem Innenraum annähernd konstant ist. Diese Volumenänderung wird durch eine verschiebbare Trennwand herbeigeführt, die mit einem thermischen Ausdehnungsstoff zusammenwirkt (DE-OS 31 41 295, DE-OS 34 32 605, DE-PS 33 24 240, DE-OS 34 32 604). Diese bekannten Lösungen erfordern einen relativ hohen mechanischen Aufwand und ermöglichen keine ausreichend exakte Konstanthaltung der Ausschubkräfte einer Gasfeder über weite Temperaturbereiche.

Der Erfindung liegt daher die Aufgabe zugrunde, eine Gasfeder der gattungsgemäßen Art so auszugestalten, daß mit relativ einfachen Mitteln eine Konstanthaltung der Ausschubkraft über weite Temperaturbereiche gewährleistet ist.

Diese Aufgabe wird erfindungsgemäß durch die Merkmale im Kennzeichnungsteil des Anspruches 1 gelöst. Durch die erfindungsgemäßen Maßnahmen wird erreicht, daß durch einen gesteuerten Elektromotor, der beim üblichen Einsatz der Gasfeder in ein Kraftfahrzeug von dessen Bordnetz versorgt wird, der Druck in der Gasfeder exakt konstant gehalten wird. Hierbei kann die Ansteuerung des Elektromotors, der die Druckerzeugungs-Einheit ansteuert, entweder in Abhängigkeit von der Temperatur oder vom Druck in der Gasfeder betätigt werden.

Anspruch 2 gibt eine besonders einfache Ausgestaltung für die Druckerzeugungs-Einheit wieder. Anstelle eines Druckausgleichs-Zylinders kann selbstverständlich auch ein Kompressor eingesetzt werden. Bei der Ausgestaltung nach Anspruch 2 ist mit besonderem Vorteil die einfache Weiterbildung nach Anspruch 3 möglich. Die erfindungsgemäßen Maßnahmen führen dazu, daß bei Einsatz von mehreren Gasfedern sichergestellt werden kann, daß in allen Gasfedern identischer Druck herrscht, so daß keine unsymmetrischen Kraftverhältnisse auftreten. Um bei Einsatz der erfindungsgemäßen Gasfeder in einem Kraftfahrzeug dessen elektrisches Bordnetz zu schonen, sind die Maßnahmen nach Anspruch 5 vorgesehen.

Weitere Vorteile und Merkmale der Erfindung ergeben sich aus weiteren Unteransprüchen und der nachfolgenden Beschreibung eines Ausführungsbeispiels anhand der Zeichnung. Es zeigt

Fig. 1 eine Heckpartie eines Kraftfahrzeuges mit zwei erfindungsgemäßen Gasfedern in perspektivischer Darstellung und

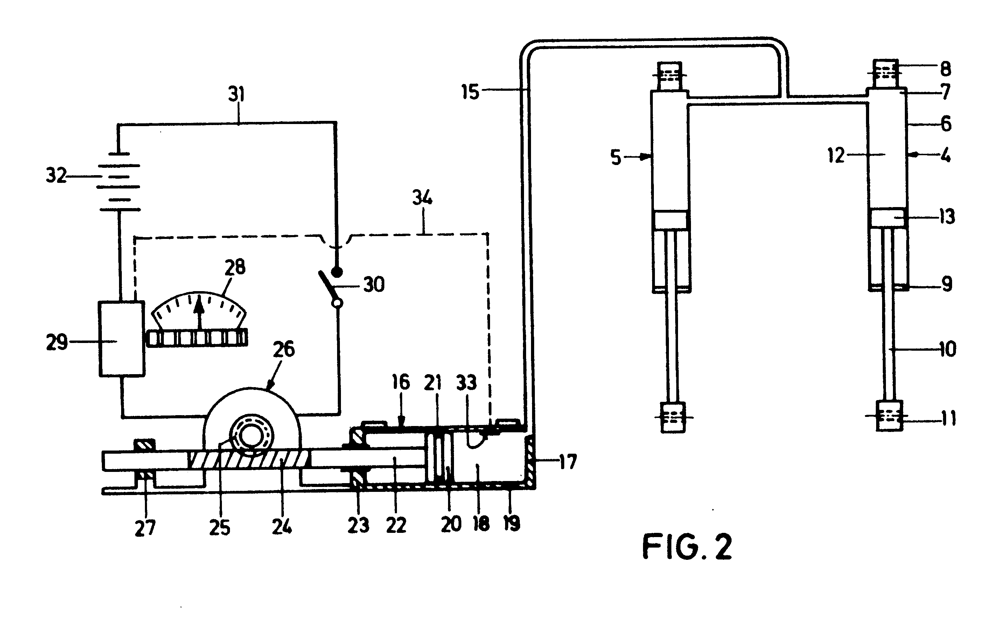

Fig. 2 die beiden Gasfedern mit einem Druckausgleichs-Zylinder einschließlich Stellmotor und Steuerungseinrichtungen.

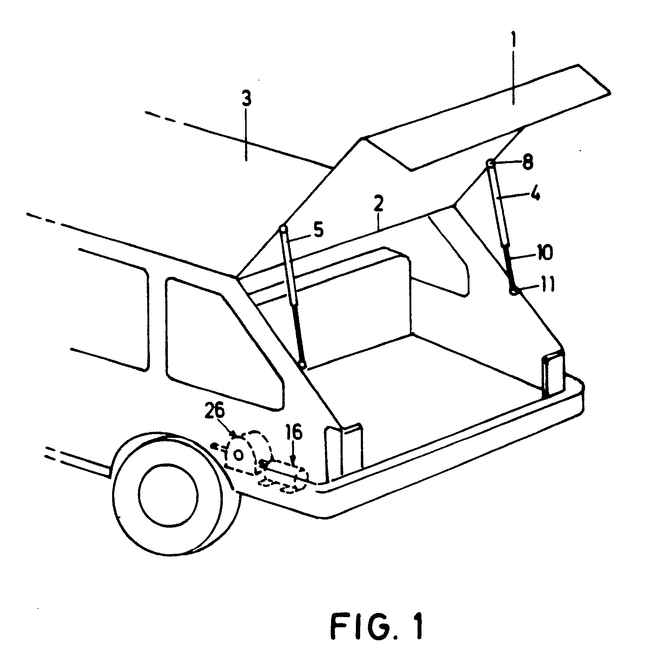

In Fig. 1 ist die Heckpartie eines Kraftfahrzeuges dargestellt, das mit einer Heckklappe 1 versehen ist, die um eine obere Schwenkachse 2 an der Karosserie 3 schwenkbar angelenkt ist. An beiden Seiten der Heckklappe 1 sind Gasfedern 4,5 angelenkt. Jede Gasfeder 4 bzw. 5 weist ein zylindrisches Gehäuse 6 auf, das an seinem einen - in der Zeichnung oberen - Ende 7 geschlossen ausgebildet ist. Hier ist ein Schwenkgelenk 8 zur schwenkbaren Anbringung an jeweils einer Seite der Heckklappe 1 ausgebildet.

Am anderen - in der Zeichnung unteren - Ende 9 ist eine Kolbenstange 10 aus dem Gehäuse 6 herausgeführt, die ebenfalls mittels eines Schwenkgelenks 11 schwenkbar an der Karosserie 3 angelenkt ist. Am im Innenraum 12 des Gehäuses 6 befindlichen Ende ist die abgedichtet aus letzterem herausgeführte Kolbenstange 10 mit einem Führungs- und Dämpfungskolben 13 versehen.

Der Innenraum 12 jeder Gasfeder 4 bzw. 5 ist mit Druckgas gefüllt, so daß die Gasfedern 4 bzw. 5 auf die Heckklappe 1 eine nach oben in Öffnungsrichtung 14 der Heckklappe 1 gerichtete Kraft ausüben.

Die beiden Gehäuse 6 der beiden Gasfedern 4,5 sind mittels einer Verbindungsleitung 15 mit einem Druckausgleichs-Zylinder 16 verbunden. Die Verbindungsleitung 15 mündet in diesen Zylinder 16 im Bereich von dessen geschlossenem Ende 17. Ein Druckausgleichs-Raum 18 in diesem Zylinder wird einerseits durch eine zylindrische Wand 19, das geschlossene Ende 17 und einen im Raum 18 geführten Druckausgleichs-Kolben 20 begrenzt. Dieser Kolben 20 ist mittels einer Dichtung 21 dicht an der Wand 19 geführt. Der Kolben 20 ist mit einer Kolbenstange 22 verbunden, die durch das dem geschlossenen Ende 17 entgegengesetzte Ende 23 des Zylinders 16 herausgeführt ist. Der Raum zwischen dem Ende 23 und dem Kolben 20 steht unter Atmosphärendruck.

Die Kolbenstange 22 ist mit einer Zahnstange 24 gekoppelt, in die ein Ritzel 25 eines als Getriebemotor ausgebildeten Stellmotors 26 eingreift. Bei einem Antrieb des Stellmotors 26 wird die fluchtend mit der Kolbenstange 22 angeordnete und mit dieser fest verbundene Zahnstange 24 parallel zu sich selbst in einer Führung 27 verschoben, wodurch der Druckausgleichs-Kolben 20 verschoben wird. Hierdurch wird das Volumen des Druckausgleichs-Raums 18 verändert. Wie Fig. 1 zu entnehmen ist, kann der Stellmotor 26 mit dem Druckausgleichs-Zylinder 16 benachbart zur Heckklappe 1 angeordnet sein, um die Länge der Verbindungsleitung 15 so gering wie möglich zu halten.

Der Stellmotor 26 wird über einen Temperatur-Geber 28 angesteuert, der zweckmäßigerweise im Innenraum des Kraftfahrzeuges, und zwar in der Nähe einer der Gasfedern 4,5 angeordnet ist, so daß er eine zumindest angenähert identische Temperatur anzeigt, wie sie bei den Gasfedern 4 bzw. 5 herrscht. Dieser Temperatur-Geber 28 gibt ein der Temperatur entsprechendes Signal an ein Steuergerät 29, über das der Stellmotor 26 angesteuert wird. Um bei Temperaturwechsel unnötige Verstellungen des Druckausgleichs-Kolbens 20 und damit einen unnötigen Stromverbrauch des Stellmotors 26 zu vermeiden, ist ein Schalter 30 mit einem Türschloß des Kraftfahrzeugs gekoppelt, der beim Öffnen des Türschlosses geschlossen wird. Damit wird über eine Leitung 31 ein Stromkreis über diesen Schalter 30, die Autobatterie 32, das Steuergerät 29 und den Stellmotor 26 geschlossen. Im Steuergerät 29 ist vorprogrammiert, daß bei einer bestimmten Temperatur der Kolben 20 in eine ganz bestimmte Stellung verfahren wird. Entsprechend der direkten Proportionalität zwischen der absoluten Temperatur des Gases und dem Soll-Volumen der Innenräume 12 der Gasfedern 4,5 der Verbindungsleitung 15 und des Druckausgleichs-Raums 18 bei erwünschtem konstanten Druck des Gases wird dieses Gesamtvolumen proportional zu den Temperaturänderungen geändert, d.h. mit sinkender Temperatur wird der Druckausgleichs-Raum 18 durch Verfahren des Druckausgleichs-Kolbens 20 zum geschlossenen Ende 17 des Druckausgleichs-Zylinders 16 verkleinert und umgekehrt.

Anstelle des Temperatur-Gebers 28 kann auch ein im Gasraum, beispielsweise also im Druckausgleichs-Raum 18 angeordneter Druck-Geber 33 vorgesehen sein. Von diesem Druckgeber wird ein den Druck des Gases repräsentierendes Signal über eine gestrichelt dargestellte Signalleitung 34 an das Steuergerät 29 gegeben. Dieses löst beim Schließen des Schalters 30 ein Verfahren des Kolbens 20 aus, bis ein vorgegebener, am Steuergerät 29 eingestellter Druck wieder hergestellt ist. Auf diese Weise ist ebenfalls eine Konstant-Regelung des Gasdruckes möglich.

Wenn bei einer temperaturabhängigen Ansteuerung des Druckausgleichs-Zylinders 16 die Verstellung entsprechend Temperaturschritten erfolgt, dann können die Temperaturschritte oder Temperaturintervalle, die jeweils ein Verfahren des Kolbens 20 um einen bestimmten Betrag auslösen, bei tieferen Temperaturen kleiner als bei höheren Temperaturen gemacht werden, da das unerwünschte Schließen bzw. Absenken der Heckklappe 1 bei zu geringem Gasdruck problematischer ist als zu große Ausschubkräfte der Gasfeder 4 bzw. 5 bei zu hohen Temperaturen.

## Ansprüche

1. Gasfeder mit temperaturunabhängiger Ausschubkraft, insbesondere als Hub- und/oder Abstützelement für einen Deckel, mit einem im wesentlichen zylindrischen, an einem Ende geschlossenen, einen mit Druckgas gefüllten Innenraum aufweisenden Gehäuse und einer axial verschiebbar im Gehäuse angeordneten, aus dessen anderem Ende abgedichtet herausgeführten Kolbenstange, mit Befestigungselementen am geschlossenen Ende des Gehäuses und am freien äußeren Ende der Kolbenstange und mit einer Einrichtung zur angenäherten Konstanthaltung des Druckes des Druckgases, dadurch gekennzeichnet, daß der Innenraum (12) der Gasfeder (4 bzw. 5) über eine Verbindungsleitung (15) mit einer Druckerzeugungs-Einheit verbunden ist, die mittels eines Elektromotors in Abhängigkeit von der Temperatur oder dem Druck des Gases in der Gasfeder (4,5) antreibbar ist.

2. Gasfeder nach Anspruch 1, dadurch gekennzeichnet, daß die Druckerzeugungs-Einheit durch einen Druckausgleichs-Zylinder (16) gebildet ist, in dem ein Druckausgleichs-Kolben (20) verschiebbar angeordnet ist.

3. Gasfeder nach Anspruch 2, dadurch gekennzeichnet, daß der Druckausgleichs-Kolben (20) relativ zum Druckausgleichs-Zylinder (16) mittels eines Stellmotors (26) antreibbar ist.

4. Gasfeder nach einem der Ansprüche 1 bis 3, dadurch gekennzeichnet, daß mehrere Gasfedern (4,5) an die Druckerzeugungs-Einheit angeschlossen sind.

5. Gasfeder nach einem der Ansprüche 1 bis 4, dadurch gekennzeichnet, daß bei Einsatz in einem Kraftfahrzeug ein von einem Türschloß des Kraftfahrzeuges betätigter Schalter (30) für den Elektromotor vorgesehen ist.

6. Gasfeder nach einem der Ansprüche 1 bis 5, dadurch gekennzeichnet, daß bei Einsatz in einem Kraftfahrzeug ein Temperatur-Geber (28) zur Ansteuerung des Elektromotors im Innenraum des Kraftfahrzeuges angeordnet ist.

7. Gasfeder nach einem der Ansprüche 1 bis 5, dadurch gekennzeichnet, daß ein vom Druckgas beaufschlagter Druck-Geber (33) zur Ansteuerung des Elektromotors vorgesehen ist.

8. Gasfeder nach Anspruch 6 oder 7, dadurch gekennzeichnet, daß ein den Elektromotor ansteuerndes Steuergerät (29) vorgesehen ist, das mit dem Temperatur-Geber (28) oder dem Druck-Geber (33) verbunden ist.

FIG. 1

FIG.2

EP 0 379 864 A2